# EUROPEAN PATENT SPECIFICATION

(11) **EP 2 571 297 B1**
(45) Date of publication and mention of the grant of the patent: **16.09.2020**
(21) Application number: 11780196.9
(22) Date of filing: 10.05.2011
(51) Int. Cl.: H04W 4/021, H04W 4/70

(54) **LOCATION-BASED MACHINE-TO-MACHINE COMMUNICATION METHOD, SYSTEM AND DEVICE**
STANDORTBASIERTES MASCHINE-ZU-MASCHINE-KOMMUNIKATIONSVERFAHREN SOWIE SYSTEM UND VORRICHTUNG DAFÜR
PROCÉDÉ, SYSTÈME ET DISPOSITIF DE COMMUNICATION DE TYPE MACHINE À MACHINE GÉODÉPENDANTS

(30) Priority: 10.05.2010 CN 201010171639
(43) Date of publication of application: 20.03.2013
(73) Proprietor: Huawei Technologies Co., Ltd., Longgang District Shenzhen, Guangdong 518129 (CN)
(72) Inventor: GUO, Xiaolong, Shenzhen Guangdong 518129 (CN)
(74) Representative: Epping - Hermann - Fischer
(86) International application number: PCT/CN2011/073897
(87) International publication number: WO 2011/140975

(56) References cited:
- WO-A1-2009/002236
- WO-A1-2009/122219
- "3rd Generation Partnership Project; Technical Specification Group Services and System Aspects; Service requirements for machine-type communications; Stage 1 (Release 10)", 3GPP STANDARD; 3GPP TS 22.368, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V2.0.0, 22 March 2010 (2010-03-22), pages 1-22, XP050401972, [retrieved on 2010-03-22]
- 'Technical specification group services and system aspects, service requirement for Machine-Type communications (MTC); stage 1 (release 10)' 3RD GENERATION PARTNERSHIP PROJECT, 3GPP TS 22.368 V10.0.0 March 2010, pages 6 - 22, XP050402279
- '3rd Generation Partnership Project, technical specification group services and system aspects: study on facilitating machine to machine communication in 3GPP systems (release 8)' 3RD GENERATION PARTNERSHIP PROJECT, 3GPP TS 22.868 V8.0.0 March 2007, XP050361381
- KPN ET AL: "Key Issue - Location Specific Trigger", 3GPP DRAFT; S2-100096_MTC DEVICE TRIGGERING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 12 January 2010 (2010-01-12), XP050432724,

## Description

This application claims priority to Chinese Patent Application No. 201010171639.8, filed on May 10, 2010 and entitled " METHOD, SYSTEM AND APPARATUS OF LOCATION-BASED MACHINE-TO-MACHINE COMMUNICATION

### FIELD OF THE INVENTION

The present invention relates to the field of radio communication technologies and, in particular, to a location-based machine-to-machine communication method, system, and apparatus.

### BACKGROUND OF THE INVENTION

With rapid development of radio communication technologies and information technologies, M2M (Machine to Machine, machine to machine) communication services take on greater and greater market potentialities. The market potentialities of M2M are not limited to the communication industry. The M2M communication services are also applicable to bidirectional communication, for example, collecting information, setting parameters and sending various service instructions at a long distance.

Generally, an M2M application system includes an MTC Device (Machine Type Communications Device), an MTC Server (Machine Type Communications Server), and a network part. The network part provides communication between the MTC device and the MTC server, and includes an access network element and a core network element. The core network elements include various logical function entities such as an MME (Mobility Management Entity, mobility management entity) in an SAE (System Architecture Evolution,

)/LTE (Long Term Evolution) system, or an SGSN (Serving GPRS Support Node) in a 2G/3G system. The MTC device is a terminal capable of M2M functions, for example, a special industrial application terminal. The MTC server can collect or process service data uploaded by the MTC device, and can also monitor MTC devices.

In various M2M application scenarios, there is a location-based M2M communication service. For example, a sensor is installed on a vehicle to measure movement speed, temperature, and so on. When the traffic agency wants to know road conditions of a specific area A, such as traffic jam in west urban area of Beijing city, the network side may send information to all vehicles in specific area A so that all or part of the vehicles in specific area A report their current speed to the network side. In this way, after the network side receives the reported speed data, the traffic agency can know the traffic jam conditions of specific area A according to the reported speed data.

In the prior art, the network side has a mobility management function for every MTC device. Therefore, the network side can trace the location information of every MTC device at any moment. When the network side triggers MTC devices in specific area A to report their service information, in order to trace the location information of every MTC device, the network side needs to allocate plenty of identifier resources to many MTC devices and save their respective core network context and subscription information, and so on, which wastes storage space and bearer resources of the network side drastically, consumes network overhead, device overhead, and air interface resources, and increases power consumption of the terminal.

Technical Specification 3GPP TS 22.368, V2.0.0 of the 3^{rd} Generation Partnership Project; Technical Specification Group Services and System Aspects; Service requirements for machine-type communications; Stage 1 (Release 10) discloses that a network shall be able to initiate a trigger to the MTC Devices based on area information provided to the network operator.

### SUMMARY OF THE INVENTION

To overcome the foregoing technical problem, embodiments of the present invention provide a location-based machine-to-machine communication method, system, and apparatus to save storage space and bearer resources of the network side and reduce network overhead, device overhead and air interface resource consumption as defined in the appended claims.

Embodiments of the present invention disclose the following technical solutions:
A location-based machine-to-machine communication method includes: receiving, by each core network device of a multiple of core network devices covering a first area, a first service request sent by an MTC server and intended for obtaining service data of a first service from first MTC devices that execute the first service in the first area, where the first MTC devices share a first terminal identifier and first subscription information and each core network device manages a respective part of the first MTC devices and uses the first terminal identifier to trigger the respective part of the first MTC devices to access a network; receiving, by a network device, the service data of the first service reported by the first MTC devices after the first MTC devices access the network as triggered; sending, by the network device, the service data to the MTC server; wherein the step of each core network device receiving the first service request sent by the MTC server and intended for obtaining the service data of the first service in the first area, and using the first terminal identifier to trigger the respective part of the first MTC devices in the first area to access the network, comprises: sending, by each core network device, according to location information of the first area and the first terminal identifier carried in the service request, an access trigger message that carries the first terminal identifier to an eNodeB in the first area; and sending, by the eNodeB, the access trigger message to the respective part of the first MTC devices in the first area to trigger them to access the network; sending, by each of the respective part of the first MTC devices, an access request including the first terminal identifier to the corresponding managing core network device, if the managing core network device has a core network context for the first MTC device, establishing, by the managing core network device, a bearer based on the core network context for reporting the service data of the first MTC device to the network device, if the managing core network device has no core network context of the first MTC device, sending, by the core network device, an Update Location message including the first terminal identifier to a home subscriber server, HSS, of the core network device for requesting the first subscription information, obtaining, by the HSS, the first subscription information based on the first terminal identifier included in the Update Location message and adding, by the HSS, an identifier of the managing core network device to a core network device list corresponding to the first subscriber information, returning, by the HSS, the first subscription information to the managing core network device for establishing the core network context for the first MTC device, establishing, by the managing core network device, a bearer based on the core network context derived from the first subscription information for the first MTC device to report service data of the first MTC device to the network device, checking, by the HSS, whether the core network device list comprises identifiers of other core network devices of the multiple core network devices area corresponding to the first subscription information, wherein the other core network device manage respective parts of the first MTC devices and have respective core network contexts for the respective parts of the first MTC devices based on the first subscription information, wherein the respective core network contexts are used for generating bearers to report service data of the respective parts of the MTC devices to the network device, if so, forbidding, by the HSS, to send a Cancel Location message to the other core network devices of the multiple core network devices, wherein the Cancel Location message causes the other core network devices to delete the respective core network contexts for the respective parts of first MTC devices.

A location-based machine-to-machine system includes a network device, first MTC devices communicationally connected with the network device, an MTC server communicationally connected with the network device, and a multiple of core network devices covering a first area. Each core network device of the multiple of core network devices is configured to: after receiving a first service request sent by the MTC server and intended for obtaining service data of a first service from first MTC devices that execute the first service in the first area and share a first terminal identifier and first subscription information, manage a respective part of the first MTC devices and use the first terminal identifier to trigger the respective part of the first MTC devices to access a network; the network device is specifically configured to receive the service data reported by the first MTC devices as triggered after the first MTC devices access the network as triggered, and send the reported service data to the MTC server; wherein each core network device is specifically configured to send, according to location information of the first area and the first terminal identifier carried in the service request, an access trigger message that carries the first terminal identifier to an eNodeB in the first area; the eNodeB is configured to send the access trigger message to the respective part of the first MTC devices in the first area to trigger them to access the network; each of the respective part of the first MTC devices is configured to send an access request including the first terminal identifier to the corresponding managing core network device, if the managing core network device has a core network context for the first MTC device, the managing core network device is configured to establish a bearer based on the core network context for reporting the service data of the first MTC device to the network device, if the managing core network device has no core network context of the first MTC device, the core network device is configured to send an Update Location message including the first terminal identifier to a home subscriber server, HSS, of the core network device for requesting the first subscription information, the HSS is configured to obtain the first subscription information based on the first terminal identifier included in the Update Location message, add an identifier of the managing core network device to a core network device list corresponding to the first subscriber information, and return the first subscription information to the managing core network device for establishing the core network context for the first MTC device, the managing core network device is configured to establish a bearer based on the core network context derived from the first subscription information for the first MTC device to report service data of the first MTC device to the network device, the HSS is configured to check whether the core network device list comprises identifiers of other core network devices of the multiple core network devices area corresponding to the first subscription information, wherein the other core network device manage respective parts of the first MTC devices and have respective core network contexts for the respective parts of the first MTC devices based on the first subscription information, wherein the respective core network contexts are used for generating bearers to report service data of the respective parts of the MTC devices to the network device, if so, forbid to send a Cancel Location message to the other core network devices of the multiple core network devices, wherein the Cancel Location message causes the other core network devices to delete the respective core network contexts for the respective parts of first MTC devices.

As revealed in the foregoing embodiments, compared with the prior art, this application brings the following benefits:
The first MTC devices that execute the first service share the first terminal identifier and the first subscription information, and access the network as triggered by the network device or proactively; after the first MTC devices access the network, the network device receives the service data reported by the first MTC devices, and sends the reported service data to the MTC server.

The network device does not need to trace the location of the MTC devices, and the network can set up the user-plane and control-plane bearers of MTC devices without having to store their respective core network contexts or subscription information of plenty of MTC devices.

### BRIEF DESCRIPTION OF THE DRAWINGS

To make the technical solution in embodiments of the present invention or in the prior art clearer, the following outlines the accompanying drawings for illustrating embodiments of the present invention or the prior art. Apparently, the accompanying drawings outlined below are for exemplary purpose only, and persons of ordinary skill in the art can derive other drawings from such accompanying drawings without creative effort.
FIG. 1 is a flowchart of a location-based machine-to-machine communication method;
FIG. 2 is a signaling flowchart of a network device paging an MTC device according to an embodiment of the present invention;
FIG. 3 is a signaling flowchart of different MTC devices accessing a network according to an embodiment of the present invention;
FIG. 4 is a signaling flowchart of a location-based machine-to-machine communication method according to an embodiment of the present invention;
FIG. 5 is a flowchart of a location-based machine-to-machine communication method according to another embodiment of the present invention;
FIG. 6 is a structural diagram of a location-based machine-to-machine communication system according to an embodiment of the present invention;
FIG. 7 is a structural diagram of a communication apparatus according to an embodiment of the present invention; and
FIG. 8 is a structural diagram of an MTC device according to an embodiment of the present invention.

### DETAILED DESCRIPTION OF THE EMBODIMENTS

Embodiments of the present invention are detailed below with reference to accompanying drawings. The exemplary embodiments of the present invention and the description thereof are illustrative in nature, and shall not be construed as a limitation on the present invention.

### Embodiment 1

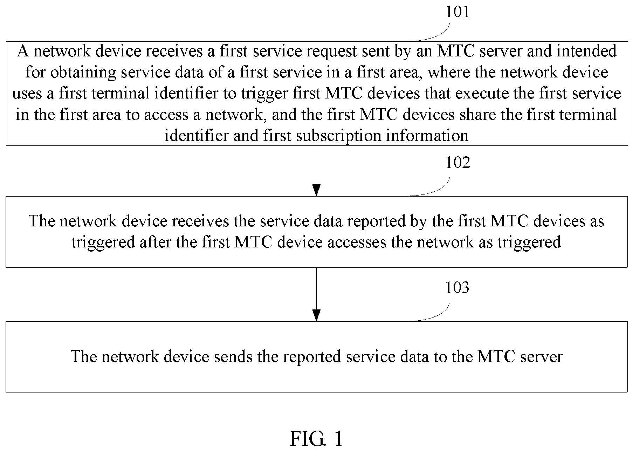

FIG. 1 is a flowchart of a location-based machine-to-machine communication method according to an embodiment of the present invention. The method includes the following steps:
Step 101: A network device receives a first service request sent by an MTC server and intended for obtaining service data of a first service in a first area, where the network device uses a first terminal identifier to trigger first MTC devices that execute the first service in the first area to access a network, and the first MTC devices share the first terminal identifier and first subscription information.

In the solution in this embodiment, the first MTC devices that execute the first service share the first terminal identifier and the first subscription information. It should be noted that the first area is any specified area, for example, for the purpose of obtaining the service data of the west urban area, the west urban area is the first area; for the purpose of obtaining the service data of the east urban area, the east urban area is the first area. The first service is any specified service. All MTC devices that execute the first service in the first area are the first MTC devices, which share the terminal identifier and the subscription information. Moreover, the terminal identifier and subscription information shared by the first MTC devices are the first terminal identifier and the first subscription information. For example, the network side stipulates that 1000 mobile devices in the MTC devices serve as the first MTC devices for detecting the traffic conditions of the east urban area, and sensors for measuring the movement speed are installed on the 1000 mobile devices. In this case, the east urban area is the first service area, and detection of the traffic conditions is the first service. According to the solution in this embodiment, 1000 mobile devices share a terminal identifier and subscription information, namely, the first terminal identifier and the first subscription information.

Each device has its identifier, such as IMSI (International Mobile Subscriber Identity). After the device is attached to the network, the network allocates a TMSI (Temporary Mobile Subscriber Identity) to the device. In the solution in this embodiment, the same TMSI may be set for every first MTC device that executes the first service, and the TMSI serves as a terminal identifier, and therefore, the first MTC devices that execute the first service share the first terminal identifier. Alternatively, on the basis of ensuring that each first MTC device has a different TMSI, a shared Group ID (group identifier) or Service ID (service identifier) is set for all first MTC devices that execute the first service, and the Group ID or Service ID serve as a first terminal identifier, and therefore, the first MTC devices that execute the first service share the first terminal identifier. Nevertheless, those skilled in the art may use another identifier of the same function as the terminal identifier in this embodiment. This embodiment does not restrict the form of the identifier.

When the user expects to obtain the service information of the first area, such as the traffic conditions of the east urban area, the user sends a first service request to the network device through the first MTC server to obtain the service data of the first service of the first area. The user may send the first service request, which is intended for obtaining the service data of the first service of the first area, to a relay node or core network device on the network side through the MTC server. For example, the relay node or core network device may be an MME (Mobile Management Entity) or SGSN (Serving GPRS Support Node).

If the MTC server sends a service request to the relay node, when the network device receives the first service request sent by the MTC server and intended for obtaining the service data of the first service in the first area, the network device uses the first terminal identifier to trigger the first MTC devices in the first area to access the network, and the triggering includes: after the relay node in the network receives the first service request sent by the MTC server and intended for obtaining the service data of the first service in the first area, the relay node on the network side forwards the first service request to the core network device that covers the first area; according to the location information of the first area and the first terminal identifier carried in the service request, the core network device sends an access trigger message that carries the first terminal identifier to an eNodeB that covers the first area; the eNodeB sends the access trigger message to the first MTC devices in the first area, where the first MTC devices share the first terminal identifier and the first subscription information.

If the MTC server sends a service request to the core network device, when the network device receives the first service request sent by the MTC server and intended for obtaining the service data of the first service in the first area, the network device uses the first terminal identifier to trigger the first MTC devices in the first area to access the network, and the triggering includes: the core network device receives the first service request sent by the MTC server and intended for obtaining service data of the first service in the first area; according to the location information of the first area and the first terminal identifier carried in the service request, the core network device sends an access trigger message that carries the first terminal identifier to the eNodeB that covers the first area; the eNodeB sends the access trigger message to the first MTC devices in the first area so that the first MTC devices access the network, where the first MTC devices share the first terminal identifier and the first subscription information.

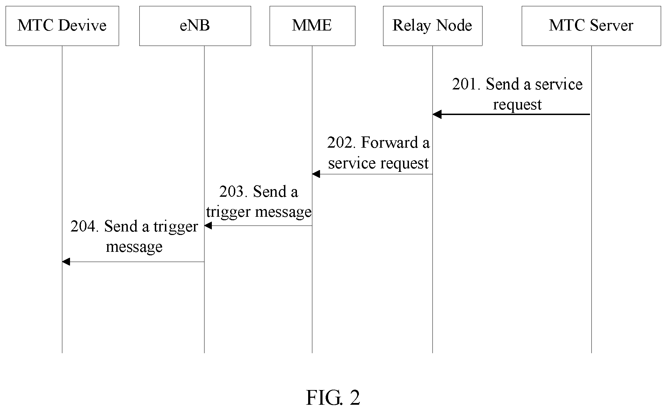

FIG. 2 is a signaling flowchart of a network device paging an MTC device according to an embodiment of the present invention. The core network device is an MM, and the MTC server sends the service request to the relay node first. The process includes the following steps:
Step 201: The MTC server (machine type communications server) sends a first service request to the relay node to obtain the service data of the first service in the first area, where the first service request includes the location information of the first area and the first terminal identifier.

There may be multiple relay nodes.

Step 202: The relay node forwards the first service request to a core network node that covers the first area, for example, to an MME or SGSN (the following takes the MME as an example). Alternatively, the MTC server may send the first service request to the MME without passing through the relay node.

Step 203: The MME sends an access trigger message to the eNB (eNodeB) that covers the first area.

A mapping relationship between the location information and the MME is set on the relay node. After obtaining the location information of the first area in the service request, the relay node can obtain the MME that covers the first area according to the mapping relationship, and forward the first service request to the MME that covers the first area.

Similarly, a mapping relationship between the location information and the eNodeB is set on the MME. After obtaining the location information of the first area in the first service request, the MME can know the eNodeB that covers the first area according to the mapping relationship, and then send the access trigger message that carries the terminal identifier to the eNodeB that covers the first area.

Step 204: The eNodeB that covers the first area delivers the access trigger message that carries the first terminal identifier, where the access trigger message may further include the location information of the first area. The first MTC devices that execute the first service share the first terminal identifier. When a first MTC device detects a paging message that carries the first terminal identifier, the first MTC device sends an access request and reports relevant information to the network device.

When the MTC server sends the first service request to the MME directly, step 201 and step 202 change to: The MTC server sends the first service request to the MME to obtain the service data of the first service in the first area.

It should be noted that the trigger message is: a paging signaling, a CBS (cell broadcast signaling), an MBMS (multimedia broadcast multicast service) signaling or a broadcast message.

Further, it should be noted that the relay nodes include O&M (Operation and Maintenance) system, HSS (Home Subscriber Server, home subscriber server), P-GW (Packet Data Network Gateway), S-GW (Serving Gateway), GGSN (GateWay GPRS Support Node), or other device capable of forwarding the first service request.

Step 102: The network device receives the service data reported by the MTC device as triggered after the first MTC device accesses the network as triggered.

In the specific area, after the MTC devices that share the first terminal identifier send the access request to the MME, the MME judges whether the MME itself stores the core network context of the first MTC devices; if so, the MME creates a bearer for the first MTC devices; otherwise, the MME obtains the core network context of the first MTC devices first, and then creates the bearer for the first MTC devices; the packet data network gateway receives the service data reported by the first MTC devices through the bearer. The created bearer may be a user-plane bearer, a signaling-plane bearer, or other bearer, which is not limited herein.

Besides, for the first MTC devices that share the first terminal identifier and the first subscription information in the first area, in order to ensure them to create a connection relationship with the network simultaneously, when the first MTC devices access the network as triggered by the network device, if the accessed core network device lacks the core network context of the MTC devices, the accessed core network device sends an Update Location message to the home subscriber server (HSS) to obtain subscription information. Upon receiving the Update Location message sent by the core network device, the HSS adds an identifier of the core network device that sends the Update Location Request into a core network device list, and forbids sending a Cancel Location message to the core network device existent in the core network device list.

For example, the first MTC devices that share the first terminal identifier and the first subscription information are MTC1 and MTC2. After MTC1 accesses MME1 in the network as triggered, if MME1 lacks the context corresponding to the first terminal identifier, MME1 sends an Update Location Request to the HSS, where the Update Location Request carries the first terminal identifier. The HSS realizes that the first terminal identifier/subscription or request message corresponds a special group/service, and therefore, adds the identifier of MME1 into a core network device list A. After MTC2 accesses MME2 in the network as triggered, if MME2 also lacks the context corresponding to the first terminal identifier, MME2 sends an Update Location Request to the HSS. Also, the Update Location Request carries the first terminal identifier. According to the first terminal identifier, the HSS knows the corresponding subscription information. The HSS adds the identifier of MME2 into core network device list A, and forbids sending a Cancel Location message to MME1 existent in the core network device list A.

The HSS forbids deleting other MME address information stored locally, which is also applicable to relevant applications of other groups. For example, multiple core network nodes (such as MME or SGSN) may get registered on a group that shares subscription information, and registering a new node will not make the HSS delete the stored core network node information. The new node may send a special instruction or parameter instructing the HSS to perform special operations, for example, instructing the HSS not to delete stored core network node information and/or to send a Cancel Location message to the stored core network node. Alternatively, the HSS may query the corresponding subscription information to know that the subscription is special subscription and that it is forbidden to delete the stored core network node information and/or to send a Cancel Location message to the stored core network node.

In a specific area A, three MTC devices MTC1, MTC2, and MTC3 execute the first service and share the first terminal identifier. When the network device uses the first terminal identifier shared by MTC1, MTC2 and MTC3 to page all first MTC devices in the specific area A, MTC1, MTC2, and MTC3 respond to the paging and report their respective service data. It is assumed that in the specific area A, MTC1 is managed by MME1, MTC2 is also managed by MME1, and MTC3 is managed by MME2.

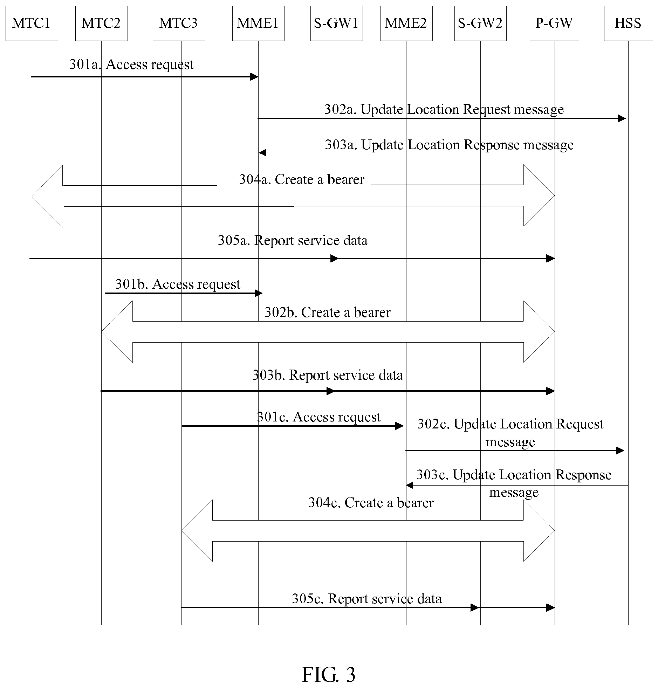

FIG. 3 is a signaling flowchart of different MTC devices accessing a network according to an embodiment of the present invention. The process of MTC1 accessing the network includes the following steps:
Step 301a: MTC1 sends an access request to MME1 in an initial attempt of access.

The access request carries the first terminal identifier shared by MTC1, MTC2, and MTC3. Step 302a: MME1 sends an Update Location Request message to the HSS (Home Subscriber Server).

After receiving the access request, MME1 judges whether the core network context of MTC1 exists locally. Because MTC1 is a device that accesses MME1 first, MME1 lacks the core network context of MTC1. Therefore, MME1 sends an Update Location Request message to the HSS (Home Subscriber Server). The Update Location Request message carries the first terminal identifier shared by MTC1, MTC2, and MTC3.

Step 303a: After receiving the Update Location Request message, the HSS sends an Update Location Response message to MME1.

The Update Location Response message carries the corresponding subscription information, and the HSS stores the address information of MME1.

Step 304a: After receiving the returned subscription information, MME1 creates the corresponding core network context, and creates a bearer for MTC1.

Step 305a: MTC1 reports service data to a P-GW (Packet Data Network Gateway) through the bearer.

The process of MTC1 accessing the network includes the following steps:
Step 301b: MTC2 sends an access request to MME1 in an attempt of access.
Step 302b: MME1 creates a bearer for MTC2.

The access request carries the first terminal identifier shared by MTC1, MTC2, and MTC3. After receiving the access request, MME1 judges whether the core network context of MTC2 exists locally. Because MTC1 and MTC2 share the same context network context and MME1 already obtains the core network context from the HSS when MTC1 accesses MME1, MME1 can create a bearer for MTC2 directly.

Step 303b: MTC2 reports service data to the P-GW through the bearer.

Alternatively, MME1 uses the bearer created by MTC1 to transmit service data for MTC2, namely, shares the bearer.

The process of MTC1 accessing the network includes the following steps:
Step 301c: MTC3 sends an access request to MME2 in an attempt of access.
Step 302c: MME2 sends an Update Location Request message to the HSS.

When MTC3 initiates access, because MTC3 is a device that accesses MME2 first, like the process of MTC1 accessing MME1, MME2 also sends an Update Location Request message inclusive of the terminal identifier to the HSS, so as to request the corresponding subscription information from the HSS. According to the terminal identifier, the HSS knows that the corresponding subscription is special subscription (for example, location-based service subscription); or the Update Location Request message carries special information to make the HSS perform special processing. Therefore, the HSS also stores the address information of MME2. However, the HSS does not delete the address information of MME1. That is, the HSS stores a core network device list that includes MME1 address information and MME2 address information, and the HSS sends no Cancel Location message to MME1, where the Cancel Location message is intended for deleting the MME1 context and the MME1 address information. That is, in the solution provided herein, the HSS uses a list to record the address information of all MMEs that request subscription, and forbids sending a Cancel Location message to the core network device existent in the core network device list.

Step 303c: After receiving the Update Location Request message, the HSS sends an Update Location Response message to MME2.

Step 304c: After receiving the returned subscription information, MME2 creates the corresponding core network context, and creates a bearer for MTC3.

Step 305c: MTC3 reports service data to the P-GW through the bearer.

When another MTC device accesses a new MME, the process is similar.

Besides, if MTC1, MTC2 and MTC3 lack the IP address, when MTC1, MTC2 and MTC3 send the access request respectively, the request message may further carry information requesting for allocating an IP address, or the request message is an Attach Request message that requests the network side to allocate an IP address. If MTC1, MTC2, and MTC3 have their respective IP address, when MTC1, MTC2, and MTC3 send the access request respectively, the request message carries the IP address. The MME configures the IP address into a filter, and therefore, the network device can put the data into the corresponding bearer and send the data to the corresponding device according to the IP address information stored in the filter when the MTC server sends the data to MTC1, and/or MTC2, and/or MTC3 through the network.

Step 103: The network device sends the reported service data to the MTC server.

It should be noted that in the M2M, radio access types such as GSM, GPRS, UMTS, SAE, and WiMAX are main long-distance connection technologies, and the short-distance connection technologies primarily include 802.11b/g, BlueTooth, Zigbee, RFID, and UWB. Other technologies are also possible for supporting the M2M communication, which is not limited herein.

In the solution in this embodiment, before and/or after the first MTC devices access the network as triggered, the method further includes: the first MTC devices perform no mobility management process. Alternatively, before and/or after the MTC devices that send the access request proactively access the network, the method further includes: the first MTC devices perform no mobility management process.

The practice of the MTC devices performing no mobility management process includes: forbidding triggering an area update process in the movement process of the MTC devices; and/or forbidding notifying the network device at the time of powering on or powering off the MTC devices; and/or forbidding the MTC devices to perform a periodical location update process. If it is forbidden to trigger an area update process in the movement process of the MTC devices, the network side does not need to store information such as the location information of each MTC device. For example, when the MTC device moves into an unrecorded area, no area update message is sent; or, when the MTC device hands over from one core network element to another core network element, no corresponding Update Location message is sent. Nevertheless, the MTC device may perform no periodical location update process. No attach procedure or detach procedure is initiated to the network at the time of powering on or powering off each MTC device.

In the prior art, when the network side traces the location information of each MTC device at any time, once the MTC device moves to an area not recorded by the network, the corresponding area update message needs to be sent. Alternatively, once the MTC device hands over from one core network element to another core network element, the corresponding Update Location message needs to be sent. In fact, the location-based M2M communication service cares whether any device in the specific area supports the service, but does not care which device. For example, the MTC device moves into an area not recorded by the network in the specific area, or hands over from one core network element to another core network element. In this case, according to the prior art, tracing the location information of every terminal device is meaningless to the network side.

Through implementation of embodiments of this application, the first MTC devices that execute the first service share the first terminal identifier and the first subscription information, and the MTC devices that share the first terminal identifier and the first subscription information in the first area access the network as triggered by the network device; after the MTC devices access the network, the network device receives the service data reported by the MTC devices, and sends the reported service data to the MTC server.

The network device does not need to trace the location of the MTC devices, and the network can set up the user-plane and control-plane bearers of MTC devices without having to store their respective core network contexts and subscription information of plenty of MTC devices. Moreover, it is not necessary to frequently respond to all kinds of signaling sent by each MTC device, thereby saving storage space and bearer resources on the network side massively and reducing network overhead, device overhead and air interface resources.

### Embodiment 2

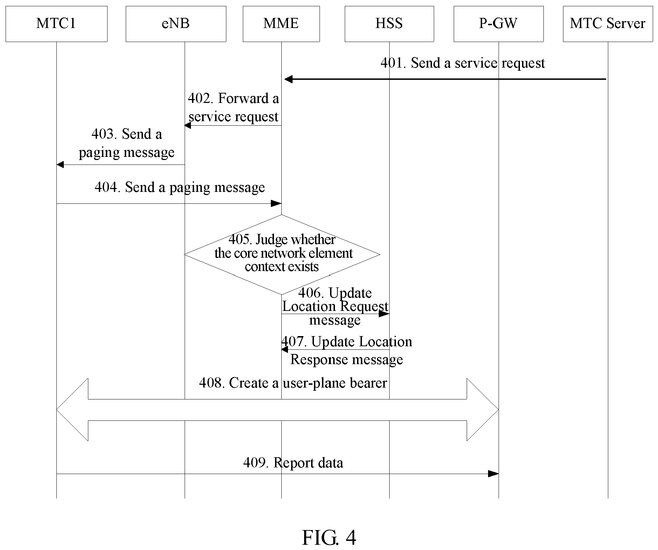

The following expounds the process of a location-based machine-to-machine communication method with reference to a detailed application scenario. For example, the MTC server expects to obtain the service data of the first service in the first area A. It is known that 3 first MTC devices in the first area A execute the first service and the first MTC devices execute no mobility management process. The following describes a communication process between the MTC server and one of the MTC devices, where the MTC device is identified as MTC1, and the communication process is M2M communication supported by the long-distance connection technology. FIG. 4 is a signaling flowchart of a location-based machine-to-machine communication method according to an embodiment of the present invention. FIG. 4 shows main function entities rather than all function entities in the communication process. The method includes the following steps:
Step 401: The MTC server sends a first service request to an MME responsible for the first area A to obtain the service data of the first service in the first area A, where the first service request includes the location information of the first area A and the first terminal identifier.

The location information may be a logical service area. In this case, a mapping relationship between the logical service area and the physical eNB is set on the MME. After obtaining the service area in the first service request, the MME can know which eNBs cover the service area according to the mapping relationship. Further, a mapping relationship between the logical service area and the cell may be set on the eNB. For example, 10 eNBs are maintained on an MME. When the service area in the first service request is an east urban area, the eNB corresponding to the east urban area may be obtained according to the mapping relationship between the east urban area and the eNB, and a paging message is sent to the corresponding eNB. After the eNB receives the paging message, if the paging message further includes logical service area information, the eNB obtains a cell corresponding to the east urban area according to the mapping relationship, and sends the paging message to the corresponding cell; if the paging message includes no logical service area information, the eNB sends the paging message to all subordinate cells.

Besides, the first MTC devices share the first terminal identifier and the first subscription information, and execute no mobility management process.

Step 402: The MME sends a paging message to the eNodeB responsible for the first area. The paging message carries the first terminal identifier and, optionally, further carries the location information.

Step 403: The eNodeB responsible for the first area A delivers the paging message to the first area A.

It is known that in the first area A, 3 first MTC devices execute the first service. In FIG. 4, the eNodeB sends the paging message to only one of the MTC devices.

In step 402 and step 403, besides delivering the paging message to trigger the first MTC devices in the first area A,other message such as CBS (cell broadcast service) signaling, MBMS (multimedia broadcast multicast service) signaling, or system broadcast message may also be delivered for triggering the MTC device in a specific area.

Step 404: MTC1 sends an access request to the MME, where the access request carries the first terminal identifier.

It should be noted that in the prior art, the rule of setting the UE ID in the RRC Connection Setup Request sent by a terminal to a eNB is: The MME allocates a unique S-TMSI (SAE Temporary Mobile Subscriber Identity) to each terminal registered in the MME. When the terminal accesses the registered area, the UE ID is equal to the S-TMSI of the terminal. Moreover, the RRC Connection Setup Complete message carries no MME identifier such as GUMMEI. In this case, if the eNodeB can find the MME corresponding to the MME identifier in the S-TMSI, the eNodeB selects the corresponding MME to ensure that the terminal accesses the same MME; otherwise, the eNodeB selects an MME randomly according to information such as network load. When the terminal accesses a non-registered area, the UE ID is equal to a Random ID generated randomly, and the RRC Connection Setup Complete message carries an MME identifier such as GUMMEI. In this case, the eNodeB selects the corresponding MME according to the MME identifier. If failing to find no corresponding MME , the eNodeB selects an MME randomly according to information such as network load.

In accessing the same RAN node, the UE ID needs to be different to prevent possible conflict or problems caused by accessing the RAN node. It is easy to know that according to the prior art, when multiple MTC devices initiate access at the registered area, if the UE ID is equal to the first terminal identifier shared by multiple first MTC devices, the multiple first MTC devices will use the same UE ID, which may lead to access conflict.

To avoid access conflict, the RRC Connection Setup Request message sent by each MTC device to the eNodeB needs to carry a different user identifier (UE ID). Therefore, to apply the present invention, the RRC Connection Setup Request message needs to always carry the Random ID as UE ID, or the UE ID part carries the Random ID, so as to prevent multiple devices from using the same UE ID value and avoid conflicts.

Besides, when a pool is shared, one pool includes multiple MMEs. Each MTC device that executes the first service may access a different MME, or access the same MME. The difference is: The former leads to resource waste to some extent.

Therefore, to save resources, the first MTC devices that execute the first service need to access the same MME. One implementation mode is: When the first MTC device sends an RRC Connection Request message or an RRC Connection Setup Complete message to the eNodeB, the eNodeB searches for the MME identifier mapped to the first terminal identifier according to the first terminal identifier carried in the RRC message; the eNodeB selects the MME corresponding to the searched MME identifier, where a mapping relationship between the terminal identifier and the MME identifier is set on the eNodeB.

Another implementation mode is: When the first MTC device sends an RRC Connection Setup Complete message to the eNodeB, the eNodeB selects to get bound to an MME corresponding to the MME identifier according to the MME identifier carried in the RRC Connection Setup Complete message, where the network broadcasts a one-to-one mapping relationship between the terminal identifier and the MME identifier.

The other implementation mode is: When the first MTC device sends the RRC Connection Request message or the RRC Connection Setup Complete message to the eNodeB, the eNodeB selects the MME corresponding to the MME identifier according to the MME identifier carried in the RRC message, where the trigger message delivered by the MME to the first MTC device carries the preset MME identifier.

Another implementation mode is: When the first MTC device that executes the first service access the eNB in the pool, such as MTC1 and MTC2, where MTC1 and MTC2 share the same first terminal identifier and the first subscription information. The eNB already selects MME1 for the accessing MTC1; when MTC2 accesses the eNB, the eNB does not select MME1 but selects MME2. Because MME2 does not store the MTC2 subscription information, MME2 sends an Update Location Request message to the HSS to obtain the MTC2 subscription information. The Update Location Request message carries the first terminal identifier. In the core network device list, the HSS detects MME1 which has the same MME Group ID as MME2, and therefore, returns the information of MME1 to MME2, for example, MMEC or GUMMEI of MME1, but does not return the group subscription information. After receiving the information of MME1 returned by the HSS, MME2 releases the connection, and instructs MTC2 to access the eNB again. The access request message carries the information of MME1. The eNB reselects MME1 according to the information of MME1. Alternatively, after receiving the information of MME1 returned by the HSS, MME2 sends a reroute request to the eNB. The reroute request carries a NAS message sent by MTC2 to MME2 and the address information of MME1, and therefore, the eNB performs routing to MME1 again, and the correct MME can be selected without releasing the connection.

As a result, the method for each first MTC device to access the same MME is applicable not only to the scenario of the first MTC devices executing the same first service, but also to the scenario of handling how to let the MTC devices in the same group access the same MME.

It should be noted that, when all the first MTC devices executing the first service access the same eNB, the eNB will create a RAN context, a RB and a S1 interface for each MTC device respectively. After different first MTC devices access the same MME, according to the first subscription information, the MME generates their respective core network element context for each first MTC device, and creates their respective RAB (Radio Access Bearer) and security context, or, the MME creates the shared bearer and/or context for them.

Step 405: The MME judges whether the core network context of MTC1 (namely, context corresponding to a public identifier) exists locally.

Step 406: If the MME itself does not store the core network context of MTC1, the MME sends an Update Location Request message to the HSS.

If the MME itself stores the core network context of MTC1, the MME proceeds to step 408 directly.

The Update Location Request message carries the first terminal identifier of MTC1.

Step 407: The HSS sends an Update Location Response message to the MME, and stores the address information of the MME.

The Update Location Response message carries the subscription information of MTC1.

Step 408: The MME creates a user-plane bearer for MTC1.

It should be noted that the MME may create their respective user-plane bearer for the three first MTC devices respectively, or create one public user-plane bearer, or create a signaling bearer to bear data.

Step 409: MTC1 reports service data to the P-GW through the bearer so that the network side sends the reported service data to the MTC server.

It should be noted that method of selecting the same MME above is applicable not only to the service-based method, but also to other group-based services.

As revealed in the embodiment above, the first MTC devices that execute the first service share the first terminal identifier and the first subscription information, and the first MTC devices that share the first terminal identifier and the first subscription information in the first area access the network as triggered by the network device or proactively; after the first MTC devices access the network, the network device receives the service data reported by the first MTC devices, and sends the reported service data to the MTC server.

The network device does not need to trace the location of the MTC devices, and the network can set up the user-plane and control-plane bearers of MTC devices without having to store their respective core network contexts and subscription information of plenty of MTC devices.

Moreover, the first MTC devices execute no mobility management process, and do not need to frequently respond to all kinds of signaling sent by each MTC device, thereby saving storage space and bearer resources on the network side massively and reducing network overhead, device overhead and air interface resources.

### Embodiment 3

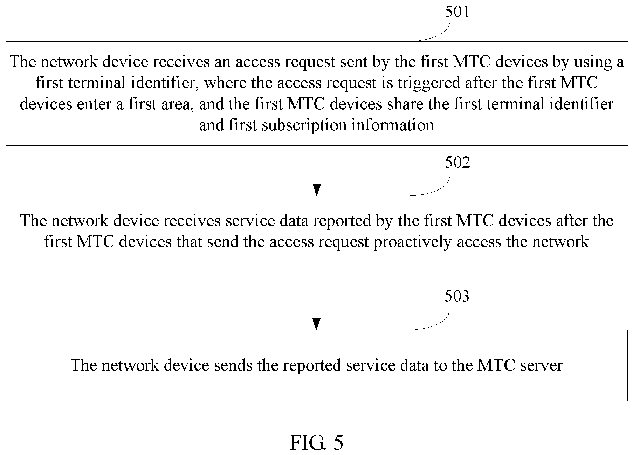

As regards the foregoing service-based communication method, not only the network may trigger the MTC devices to report the corresponding service data, but also the terminal may initiate a process of reporting the service data proactively. For example, the terminal presets the location information. After the terminal moves to the preset location, through a broadcast message the terminal understands entry into the preset location area, and initiates a process of reporting service data proactively. FIG. 5 is a flowchart of a location-based machine-to-machine communication method according to another embodiment of the present invention. As shown in FIG. 5, the procedure includes:
Step 501: The network device receives an access request sent by the first MTC devices by using a first terminal identifier, where the access request is triggered after the first MTC devices enter a first area, and the first MTC devices share the first terminal identifier and first subscription information.
Step 502: The network device receives service data reported by the first MTC devices after the first MTC devices that send the access request proactively access the network.
Step 503: The network device sends the reported service data to the MTC server.

The specific implementation process of steps 501-503 has been described in details in embodiment 1 and embodiment 2, and will not be described here any further.

The embodiment above reveals that after the first MTC devices in the first area access the network proactively, the network device receives the service data reported by the first MTC devices, and sends the reported service data to the MTC server. The network device does not need to trace the location of the MTC devices, and the network side can set up the user-plane and control-plane bearers of MTC devices without having to store the core network contexts or subscription information of plenty of MTC devices.

### Embodiment 4

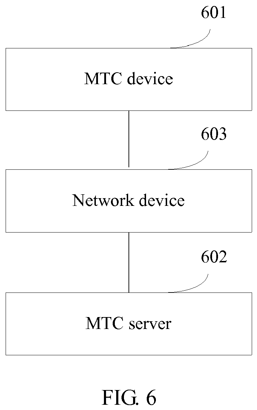

Corresponding to the location-based machine-to-machine communication method above, this embodiment provides a location-based machine-to-machine communication system. FIG. 6 is a structural diagram of a location-based machine-to-machine communication system according to an embodiment of the present invention. As shown in FIG. 6, the system includes a network device 603, first MTC devices 601 communicationally connected with the network device 603, and an MTC server 602 communicationally connected with the network device. The following describes the internal structure and connection relationships of the system with reference to the working principles of the system.

The network device 603 is configured to: after receiving a first service request sent by the MTC server 602 and intended for obtaining service data of a first service in a first area, use a first terminal identifier to trigger the first MTC devices 601 that execute the first service in the first area to access a network, where the first MTC devices 601 share a first terminal identifier and first subscription information.

After the first MTC devices 601 report service data as triggered, the network device receives the service data reported by the first MTC devices 601 as triggered, and sends the reported service data to the MTC server 602.

The network device 603 receives the first service request sent by the MTC server 602 and intended for obtaining the service data of the first service in the first area, and the network device 603 uses the first terminal identifier to trigger the first MTC devices 601 in the first area to access the network, and the triggering includes: the core network device receives the first service request sent by the MTC server 602 and intended for obtaining service data of the first service in the first area; according to the location information of the first area and the first terminal identifier carried in the service request, the core network device sends an access trigger message that carries the first terminal identifier to an eNodeB that covers the first area; the eNodeB sends the access trigger message to the first MTC devices 601 in the first area so that the first MTC devices access the network, where the first MTC devices share the first terminal identifier and the first subscription information.

While the MTC devices 601 access the network as triggered, if the HSS receives the Update Location message sent by the core network device, the HSS adds an identifier of the core network device that sends the Update Location Request into a core network device list, and forbids sending a Cancel Location message to the core network device existent in the core network device list.

In the process of accessing the network, when the first MTC devices that share the first terminal identifier and the first subscription information in the first area access the network through the same eNodeB simultaneously, RRC Connection Request messages sent by the first MTC devices to the eNodeB carries different user identifiers.

In the process of accessing the network, when the first MTC devices that share the first terminal identifier and the first subscription information in the first area access the network through the same eNodeB, the eNodeB creates different radio access network contexts, different radio bearers, and different S1 interface connections for the first MTC devices.

In the process of accessing the network, the MTC devices send an RRC Connection Setup Complete message to the eNodeB, and the eNodeB searches for the core network device identifier mapped to the terminal identifier according to the terminal identifier carried in the RRC Connection Setup Complete message, wherein, a mapping relationship between the terminal identifier and the core network device identifier is set on the eNodeB; and the eNodeB selects the core network device corresponding to the core network device identifier.

In the process of accessing the network, the first MTC devices send an RRC Connection Setup Complete message to the eNodeB, and the eNodeB searches for the core network device identifier mapped to the first terminal identifier according to the first terminal identifier carried in the RRC Connection Setup Complete message as well as the mapping relationship between the first terminal identifier and the core network device identifier; and the eNodeB selects the core network device corresponding to the core network device identifier. The mapping relationship is set in the eNodeB, or is obtained through network broadcast. Alternatively, the eNodeB selects the core network device corresponding to the core network device identifier according to the core network device identifier carried in the RRC Connection Setup Complete message.

In the process of accessing the network, when the core network device lacks the context of the first MTC devices and requests the first subscription information of the first MTC devices from the HSS, the HSS checks whether the stored core network device list includes a core network device in the same core network device pool as the core network device that has requested the first subscription information. If so, the HSS returns the stored core network device identifier that is in the same core network device pool as the core network device that hasrequested the first subscription information; if not, the HSS returns the first subscription information of the first MTC devices.

The core network device returns the core network device identifier, which is in the same core network device pool as the core network device that has requested the first subscription information, to the first MTC device, and releases the connection with the first MTC device; and the first MTC device initiates a new connection according to the core network device identifier that is in the same core network device pool as the core network device that has requested the first subscription information;
or,
The core network device returns the core network device identifier, which is in the same core network device pool as the core network device that has requested the first subscription information, to the eNodeB, and the eNodeB selects the core network device that is in the same core network device pool as the core network device that has requested the first subscription information according to the core network device identifier that is in the same core network device pool as the core network device that has requested the first subscription information, and initiates a new connection.

As revealed in the embodiment above, the first MTC devices that execute the first service share the first terminal identifier and the first subscription information, and the first MTC devices share the first terminal identifier and the first subscription information in the first area; after the MTC devices access the network as triggered by the network device, the network device receives the service data reported by the MTC devices, and sends the reported service data to the MTC server.

The network device does not need to trace the location of the MTC devices, and the network can set up the user-plane and control-plane bearers of MTC devices without having to store their respective core network contexts or subscription information of plenty of MTC devices.

### Embodiment 5

This embodiment provides a location-based machine-to-machine communication system. The system includes a network device, first MTC devices communicationally connected with the network device, and an MTC server communicationally connected with the network device. The network device receives an access request sent by the first MTC devices proactively by using a first terminal identifier, where the access request is triggered after the first MTC devices enter a first area, and the first MTC devices share the first terminal identifier and first subscription information;
receives service data reported by the first MTC devices after the first MTC devices that send the access request proactively access a network;
and sends the service data to the MTC server.

While the MTC devices access the network by sending an access request proactively, if the HSS receives the Update Location message sent by the core network device, the HSS adds an identifier of the core network device that sends the Update Location Request into a core network device list, and forbids sending a Cancel Location message to the core network device existent in the core network device list.

In the process of accessing the network, when the first MTC devices that share the first terminal identifier and the first subscription information in the first area access the network through a same eNodeB simultaneously, RRC Connection Request messages sent by the first MTC devices to the eNodeB carries different user identifiers.

In the process of accessing the network, when the first MTC devices that share the first terminal identifier and the first subscription information in the first area access the network through the same eNodeB, the eNodeB creates different radio access network contexts, different radio bearers, and different S1 interface connections for the first MTC devices.

In the process of accessing the network, the MTC devices send an RRC Connection Setup Complete message to the eNodeB, and the eNodeB searches for a core network device identifier mapped to the terminal identifier according to the terminal identifier carried in the RRC Connection Setup Complete message, wherein, a mapping relationship between the terminal identifier and the core network device identifier is set on the eNodeB; and the eNodeB selects the core network device corresponding to the core network device identifier.

In the process of accessing the network, the first MTC devices send an RRC Connection Setup Complete message to the eNodeB, and the eNodeB searches for the core network device identifier mapped to the first terminal identifier according to the first terminal identifier carried in the RRC Connection Setup Complete message as well as the mapping relationship between the first terminal identifier and the core network device identifier; and the eNodeB selects the core network device corresponding to the core network device identifier. The mapping relationship is set in the eNodeB, or is obtained through network broadcast. Alternatively, the eNodeB selects the core network device corresponding to the core network device identifier according to the core network device identifier carried in the RRC Connection Setup Complete message.

In the process of accessing the network, when the core network device lacks the context of the first MTC device and requests the first subscription information of the first MTC device from the HSS, the HSS checks whether the stored core network device list includes the core network device in the same core network device pool as the core network device that has requested the first subscription information. If so, the HSS returns the stored core network device identifier that is in the same core network device pool as the core network device that has requested the first subscription information; if not, the HSS returns the first subscription information of the first MTC device.

The core network device returns the core network device identifier, which is in the same core network device pool as the core network device that has requested the first subscription information, to the first MTC device, and releases the connection with the first MTC device; and the first MTC device initiates a new connection according to the core network device identifier that is in the same core network device pool as the core network device that has requested the first subscription information;
or,
The core network device returns the core network device identifier, which is in the same core network device pool as the core network device that has requested the first subscription information, to the eNodeB, and the eNodeB selects the core network device that is in the same core network device pool as the core network device that has requested the first subscription information according to the core network device identifier that is in the same core network device pool as the core network device that has requested the first subscription information, and initiates a new connection.

The embodiment above reveals that after the MTC devices in the first area access the network proactively, the network device receives the service data reported by the first MTC devices, and sends the reported service data to the MTC server. The network device does not need to trace the location of the MTC devices, and the network can set up the user-plane and control-plane bearers of MTC devices without having to store their respective core network contexts or subscription information of plenty of MTC devices.

### Embodiment 6

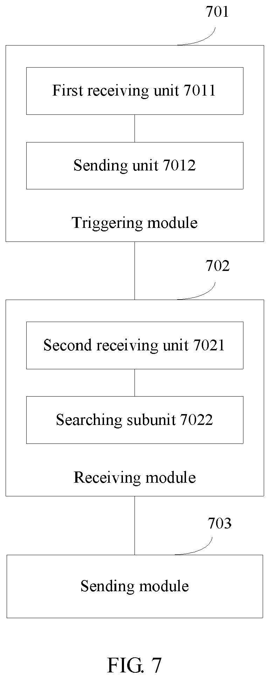

This embodiment provides a communication apparatus. FIG. 7 is a structural diagram of a communication apparatus according to an embodiment of the present invention. The communication apparatus includes a triggering module 701, a receiving module 702, and a sending module 703.

The triggering module 701 is configured to: after receiving a first service request sent by an MTC server and intended for obtaining service data of a first service in a first area, use a first terminal identifier to trigger first MTC devices in the first area to access a network, where the first MTC devices execute the first service and share a first terminal identifier and first subscription information;
The receiving module 702 is configured to receive the service data of the first service reported by the first MTC devices after the first MTC devices access the network as triggered; and
The sending module 703 is configured to send the service data to the MTC server.

The triggering module 701 includes a first receiving unit 7011 and a sending unit 7012.

The first receiving unit 7011 is configured to receive the first service request sent by the MTC server and intended for obtaining service data of the first service in the first area, whereupon, according to the location information of the first area and the first terminal identifier carried in the service request, the core network device sends an access trigger message that carries the first terminal identifier to the eNodeB that covers the first area; and
The sending unit 7012 is configured to send the access trigger message to the first MTC devices in the first area so that the first MTC devices access the network, where the first MTC devices share the first terminal identifier and the first subscription information.

The receiving module 702 includes a second receiving unit 7021 and a selecting unit 7022.

The second receiving unit 7021 is configured to: while the first MTC device accesses the network, receive an RRC Connection Setup Complete message sent by the first MTC device, search for a core network device identifier mapped to the first terminal identifier according to the first terminal identifier carried in the RRC Connection Setup Complete message as well as a mapping relationship between the first terminal identifier and the core network device identifier, and select the core network device corresponding to the core network device identifier, where the mapping relationship is set in the eNodeB or obtained through network broadcast; or select the core network device corresponding to the core network device identifier according to the core network device identifier carried in the RRC Connection Setup Complete message. The selecting unit 7022 is configured to select the core network device corresponding to the core network device identifier.

The receiving module 702 is specifically configured to create different radio access network contexts, different radio bearers, and different S1 interface connections for the MTC devices if the first MTC devices that share the first terminal identifier and the first subscription information in the first area access the network through the same eNodeB while the first MTC devices access the network.

Preferably, the communication apparatus further includes a home subscriber server (HSS).

The HSS is configured to: upon receiving the Update Location message sent by the core network device, add an identifier of the core network device that sends the Update Location Request into a core network device list, and forbid sending a Cancel Location message to the core network device existent in the core network device list.

Preferably, the HSS is further configured to: upon receiving a message sent by the receiving module for requesting the first subscription information of the first MTC device, check whether the stored core network device list includes a core network device that is in the same core network device pool as the core network device that has requested the first subscription information; if so, return the stored core network device identifier that is in the same core network device pool as the core network device that has requested the first subscription information; if not, return the first subscription information of the first MTC device.

As revealed in the embodiment above, the first MTC devices that execute the first service share the first terminal identifier and the first subscription information, and the first MTC devices access the network as triggered by the network device or proactively; after the first MTC devices access the network, the network device receives the service data reported by the first MTC devices, and sends the reported service data to the MTC server.

The network device does not need to trace the location of the MTC devices, and the network can set up the user-plane and control-plane bearers of MTC devices without having to store their respective core network contexts or subscription information of plenty of MTC devices.

### Embodiment 7

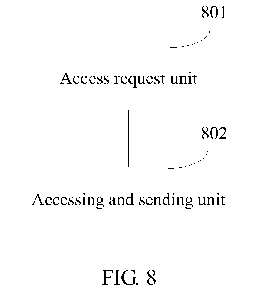

This embodiment provides an MTC device. FIG. 8 is a structural diagram of an MTC device according to an embodiment of the present invention. The MTC device includes an access request unit 801 and an accessing and sending unit 802.

The access request unit 801 is configured to send an access request to a network device proactively by using a terminal identifier of the MTC device, where the access request is triggered after the MTC device enters a first area, and the MTC devices share the terminal identifier and first subscription information; and

The accessing and sending unit 802 is configured to access a network after the access request unit sends the access request, and report service data to the network device so that the network device sends the service data to an MTC server.

Preferably, the MTC device further includes:
a trigger screening unit, configured to forbid triggering an area update process in a movement process of the MTC devices;
and/or,
a notification screening unit, configured to forbid notifying the network device at the time of powering on or powering off the MTC devices.

As revealed in the embodiment above, the first MTC devices that execute the first service share the first terminal identifier and the first subscription information, and the first MTC devices access the network proactively; after the first MTC devices access the network, the network device receives the service data reported by the first MTC devices, and sends the reported service data to the MTC server.

The network device does not need to trace the location of the MTC devices, and the network can set up the user-plane and control-plane bearers of MTC devices without having to store their respective core network contexts or subscription information of plenty of MTC devices. Preferably, the trigger screening unit and/or the notification screening unit makes the MTC device perform no mobility management process. The network device does not need to trace the location of the MTC devices, and the network can set up the user-plane and control-plane bearers of MTC devices without having to store their respective core network contexts or subscription information of plenty of MTC devices. Moreover, it is not necessary to frequently respond to all kinds of signaling sent by each MTC device, thereby saving storage space and bearer resources on the network side massively and reducing network overhead, device overhead and air interface resources.

Persons of ordinary skill in the art should understand that all or part of the steps of the method specified in any embodiment of the present invention may be implemented by a program instruction-related hardware. The program may be stored in a computer readable storage medium. When the program is implemented, the program executes the steps of the method specified in any embodiment above. The storage medium may be any medium capable of storing program codes, such as ROM, RAM, magnetic disk, or CD-ROM.

Detailed above are a location-based machine-to-machine communication method, system and apparatus according to the present invention. Although the principles and the implementation modes of the invention are described through some exemplary embodiments, these embodiments are only intended to help understand the method and the core idea of the present invention. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A location-based machine-to-machine communication method, the method comprises:
receiving (101), by each core network device of a multiple of core network devices covering a first area, a first service request sent by a machine type communications, MTC, server (602) and intended for obtaining service data of a first service from first MTC devices (601) that execute the first service in the first area, wherein the first MTC devices (601) share a first terminal identifier and first subscription information and each core network device manages a respective part of the first MTC devices (601) and uses the first terminal identifier to trigger the respective part of the first MTC devices (601) to access a network;
receiving (102), by a network device (603), the service data of the first service reported by the first MTC devices (601) after the first MTC devices (601) access the network as triggered;
sending (103), by the network device (603), the service data to the MTC server (602); wherein
the step of each core network device receiving (102) the first service request sent by the MTC server (602) and intended for obtaining the service data of the first service in the first area, and using the first terminal identifier to trigger the respective part of the first MTC devices (601) in the first area to access the network, comprises:
sending, by each core network device, according to location information of the first area and the first terminal identifier carried in the service request, an access trigger message that carries the first terminal identifier to an eNodeB in the first area; and
sending, by the eNodeB, the access trigger message to the respective part of the first MTC devices (601) in the first area to trigger them to access the network;
sending (301), by each of the respective part of the first MTC devices (601), an access request including the first terminal identifier to the corresponding managing core network device,
if the managing core network device has a core network context for the first MTC device (601), establishing, by the managing core network device, a bearer based on the core network context for reporting the service data of the first MTC device (601) to the network device (603),
if the managing core network device has no core network context of the first MTC device (601), sending (302), by the core network device, an Update Location message including the first terminal identifier to a home subscriber server, HSS, of the core network device for requesting the first subscription information,
obtaining, by the HSS, the first subscription information based on the first terminal identifier included in the Update Location message and adding, by the HSS, an identifier of the managing core network device to a core network device list corresponding to the first subscriber information,
returning, by the HSS, the first subscription information to the managing core network device for establishing the core network context for the first MTC device (601),
establishing, by the managing core network device, a bearer based on the core network context derived from the first subscription information for the first MTC device (601) to report service data of the first MTC device (601) to the network device (603),
checking, by the HSS, whether the core network device list comprises identifiers of other core network devices of the multiple core network devices area corresponding to the first subscription information, wherein the other core network device manage respective parts of the first MTC devices (601) and have respective core network contexts for the respective parts of the first MTC devices (601) based on the first subscription information, wherein the respective core network contexts are used for generating bearers to report service data of the respective parts of the MTC devices to the network device (603),
if so, forbidding, by the HSS, to send a Cancel Location message to the other core network devices of the multiple core network devices, wherein the Cancel Location message causes the other core network devices to delete the respective core network contexts for the respective parts of first MTC devices (601).

2. The method according to claim 1, wherein:
the step of sending (301), by each of the respective part of the first MTC devices (601), an access request including the first terminal identifier to the corresponding managing core network device comprises:
carrying, by a RRC Connection Request messages sent by the respective part of the first MTC devices (601) to an eNodeB, different user identifiers when the respective part of the first MTC devices that share the first terminal identifier and the first subscription information in the first area access the network through the same eNodeB simultaneously in a process of accessing the network.

3. The method according to any one of claims 1-2, wherein:
the step of sending (301), by each of the respective part of the first MTC devices (601), an access request including the first terminal identifier to the corresponding managing core network device comprises:
creating, by an eNodeB, a radio access network contexts, a radio bearer, and a S1 interface connections for each of the respective part of the first MTC devices (601) in a process of accessing the network when the first MTC devices (601) that share the first terminal identifier and the first subscription information in the first area access the network through the same eNodeB.

4. The method according to any one of claims 1-3, wherein:
the step of sending (301), by each of the respective part of the first MTC devices (601), an access request including the first terminal identifier to the corresponding managing core network device comprises:
sending, by each of the respective part of the first MTC devices (601), a RRC Connection Setup Complete message to an eNodeB in a process of accessing the network; searching, by the eNodeB, for a core network device identifier mapped to the first terminal identifier according to the first terminal identifier carried in the RRC Connection Setup Complete message as well as a mapping relationship between the first terminal identifier and the core network device identifier; and, selecting, by the eNodeB, a core network device corresponding to the core network device identifier, wherein the mapping relationship is set in the eNodeB or obtained through network broadcast; or
selecting, by the eNodeB, the core network device corresponding to the core network device identifier according to the core network device identifier carried in the RRC Connection Setup Complete message; and
selecting, by the eNodeB, the core network device corresponding to the core network device identifier.

5. A location-based machine-to-machine system, comprising:
a network device (603), first machine type communications, MTC, devices (601) communicationally connected with the network device (603), an MTC server (602) communicationally connected with the network device (603), and a multiple of core network devices covering a first area;
each core network device of the multiple of core network devices is configured to: after receiving a first service request sent by the MTC server (602) and intended for obtaining service data of a first service from first MTC devices (601) that execute the first service in the first area and share a first terminal identifier and first subscription information, manage a respective part of the first MTC devices (601) and use the first terminal identifier to trigger the respective part of the first MTC devices (601) to access a network;
the network device (603) is specifically configured to receive the service data reported by the first MTC devices (601) as triggered after the first MTC devices (601) access the network as triggered, and send the reported service data to the MTC server (602); wherein
each core network device is specifically configured to send, according to location information of the first area and the first terminal identifier carried in the service request, an access trigger message that carries the first terminal identifier to an eNodeB in the first area;
the eNodeB is configured to send the access trigger message to the respective part of the first MTC devices (601) in the first area to trigger them to access the network;
each of the respective part of the first MTC devices (601) is configured to send an access request including the first terminal identifier to the corresponding managing core network device,
if the managing core network device has a core network context for the first MTC device (601), the managing core network device is configured to establish a bearer based on the core network context for reporting the service data of the first MTC device (601) to the network device (603),
if the managing core network device has no core network context of the first MTC device (601), the core network device is configured to send an Update Location message including the first terminal identifier to a home subscriber server, HSS, of the core network device for requesting the first subscription information,
the HSS is configured to obtain the first subscription information based on the first terminal identifier included in the Update Location message, add an identifier of the managing core network device to a core network device list corresponding to the first subscriber information, and return the first subscription information to the managing core network device for establishing the core network context for the first MTC device (601),
the managing core network device is configured to establish a bearer based on the core network context derived from the first subscription information for the first MTC device (601) to report service data of the first MTC device (601) to the network device (603),
the HSS is configured to check whether the core network device list comprises identifiers of other core network devices of the multiple core network devices area corresponding to the first subscription information, wherein the other core network device manage respective parts of the first MTC devices (601) and have respective core network contexts for the respective parts of the first MTC devices (601) based on the first subscription information, wherein the respective core network contexts are used for generating bearers to report service data of the respective parts of the MTC devices to the network device (603), if so, forbid to send a Cancel Location message to the other core network devices of the multiple core network devices, wherein the Cancel Location message causes the other core network devices to delete the respective core network contexts for the respective parts of first MTC devices (601).

6. A computer program product comprising computer program code, which, when executed by a network device, first machine type communication, MTC, devices, an MTC server, a multiple of core network devices, an eNodeB and a home subscriber server HSS, will cause the network device, the first MTC devices, the MTC server, the multiple of core network devices, the eNodeB and the HSS to carry out a method according to any of claims 1-4.

## Patentansprüche

1. Standortbasiertes Maschine-zu-Maschine-Kommunikationsverfahren, das Verfahren Folgendes umfassend:
Empfangen (101) durch jedes Kernnetzwerkgerät mehrerer Kernnetzwerkgeräte, die einen ersten Bereich abdecken, einer ersten von einem Maschinentypkommunikations(MTC-)Server (602) gesendeten Dienstanforderung, vorgesehen zum Abrufen von Dienstdaten eines ersten Dienstes von ersten MTC-Geräten (601), die den ersten Dienst in dem ersten Bereich ausführen, wobei die ersten MTC-Geräte (601) eine erste Terminalkennung und erste Abonnement-Informationen gemeinsam nutzen und jedes Kernnetzwerkgerät einen entsprechenden Teil der ersten MTC-Geräte (601) verwaltet und die erste Terminalkennung nutzt, um den jeweiligen Teil der ersten MTC-Geräte (601) für den Zugriff auf ein Netzwerk auszulösen;
Empfangen (102), durch ein Netzwerkgerät (603), der Dienstdaten des ersten Dienstes, die von den ersten MTC-Geräten (601) gemeldet worden sind, nachdem die ersten MTC-Geräte (601) wie ausgelöst auf das Netzwerk zugegriffen haben;
Senden (103), durch das Netzwerkgerät (603), der Dienstdaten an den MTC-Server (602);
wobei der Schritt des Empfangens (102) der ersten vom MTC-Server (602) gesendeten Dienstanforderung, die dazu bestimmt ist, die Dienstdaten des ersten Dienstes in dem ersten Bereich zu erhalten, durch jedes Kernnetzwerkgerät, und die erste Terminalkennung zu verwenden, um den jeweiligen Teil der ersten MTC-Geräte (601) in dem ersten Bereich auszulösen, die auf das Netzwerk zugreifen, Folgendes umfasst:
Senden, durch jedes Kernnetzwerkgerät, gemäß Standortinformationen des ersten Bereichs und der ersten in der Dienstanforderung enthaltenen Terminalkennung, einer Zugriffsauslösenachricht, die die erste Terminalkennung an einen eNodeB im ersten Bereich überträgt; und
Senden, durch den eNodeB, der Zugriffsauslösenachricht an den jeweiligen Teil der ersten MTC-Geräte (601) in dem ersten Bereich, um sie für den Zugriff auf das Netzwerk auszulösen;
Senden (301), durch jeden der jeweiligen Teile der ersten MTC-Geräte (601), einer Zugriffsanforderung mit der ersten Terminalkennung an das entsprechende verwaltende Kernnetzwerkgerät,
wenn das verwaltende Kernnetzwerkgerät für das erste MTC-Gerät (601) einen Kernnetzwerkkontext aufweist, Einrichten, durch das verwaltende Kernnetzwerkgerät, eines Trägers basierend auf dem Kernnetzwerkkontext zum Melden der Dienstdaten des ersten MTC-Geräts (601) an das Netzwerkgerät (603), wenn das verwaltende Kernnetzwerkgerät keinen Kernnetzwerkkontext des ersten MTC-Geräts (601) aufweist, und Senden (302), durch das Kernnetzwerkgerät, einer Standortaktualisierungs-Nachricht mit der ersten Terminalkennung an einen Home Subscriber Server (HSS) des Kernnetzwerkgeräts zum Anfordern der ersten Abonnement-Informationen, Beschaffen, durch den HSS, der ersten Abonnement-Informationen basierend auf der ersten Terminalkennung, die in der Nachricht zum Aktualisieren des Standorts enthalten ist, und Hinzufügen, durch den HSS, einer Kennung des verwaltenden Kernnetzwerkgeräts zu einer Netzwerkgeräteliste, die den ersten Abonnenten-Informationen entspricht, und Zurückgeben, durch den HSS, der ersten Abonnement-Informationen an das verwaltende Kernnetzwerkgerät, um den Kernnetzwerkkontext für das erste MTC-Gerät (601) herzustellen, Einrichten, durch das verwaltende Kernnetzwerkgerät, eines Trägers, der auf dem Kernnetzwerkkontext basiert, abgeleitet aus den ersten Abonnement-Informationen für das erste MTC-Gerät (601), um Dienstdaten des ersten MTC-Geräts (601) an das Netzwerkgerät (603) zu melden, Prüfen, durch den HSS, ob die Liste der Kernnetzwerkgeräte Kennungen anderer Kernnetzwerkgeräte des Bereichs mit mehreren Kernnetzwerkgeräten umfasst, die den ersten Abonnement-Informationen entsprechen, wobei die anderen Kernnetzwerkgeräte entsprechende Teile der ersten MTC-Geräte (601) verwalten und entsprechende Kernnetzwerkkontexte für die jeweiligen Teile der ersten MTC-Geräte (601) basierend auf den ersten Abonnement-Informationen aufweisen, wobei die jeweiligen Kernnetzwerkkontexte zum Erzeugen von Trägern verwendet werden, um Servicedaten der jeweiligen Teile der MTC-Geräte an das Netzwerkgerät (603) zu melden, und, falls dies der Fall ist, Untersagen, durch den HSS, einer Nachricht zum Abbrechen des Standorts an die anderen Kernnetzwerkgeräte der mehreren Kernnetzwerkgeräte zu senden, wobei die Nachricht zum Abbrechen des Standorts bewirkt, dass die anderen Kernnetzwerkgeräte die jeweiligen Kernnetzwerkkontexte für die jeweiligen Teile der ersten MTC-Geräte (601) löschen.

2. Verfahren nach Anspruch 1, wobei
der Schritt des Sendens (301), durch jeden der jeweiligen Teile der ersten MTC-Geräte (601), einer Zugriffsanforderung mit der ersten Terminalkennung an das entsprechende Verwaltungskernnetzwerkgerät Folgendes umfasst:
Übertragen, durch eine RRC-Verbindungsanforderungs-Nachricht, die von dem jeweiligen Teil der ersten MTC-Geräte (601) an einen eNodeB gesendet wird, verschiedener Benutzerkennungen, wenn der jeweilige Teil der ersten MTC-Geräte, die die erste Terminalkennung und die ersten Abonnement-Informationen in dem ersten Bereich gemeinsam nutzen, in einem Netzwerkzugriffsvorgang gleichzeitig über denselben eNodeB auf das Netzwerk zugreifen.

3. Verfahren nach einem der Ansprüche 1-2, wobei:
der Schritt des Sendens (301), durch jeden der jeweiligen Teile der ersten MTC-Geräte (601), einer Zugriffsanforderung mit der ersten Terminalkennung an das entsprechende Verwaltungskernnetzwerkgerät Folgendes umfasst:
Erstellen, durch einen eNodeB, eines Funkzugangsnetzwerkkontexts, eines Funkträgers und einer S1-Schnittstellenverbindung für jeden der jeweiligen Teile der ersten MTC-Geräte (601) in einem Netzwerkzugriffsvorgang, wenn die ersten MTC-Geräte (601), die die erste Terminalkennung und die ersten Abonnement-Informationen im ersten Bereich gemeinsam nutzen, über denselben eNodeB auf das Netzwerk zugreifen.

4. Verfahren nach einem der Ansprüche 1-3, wobei:
der Schritt des Sendens (301), durch jeden der jeweiligen Teile der ersten MTC-Geräte (601), einer Zugriffsanforderung mit der ersten Terminalkennung an das entsprechende Verwaltungskernnetzwerkgerät Folgendes umfasst:
Senden, durch jeden der jeweiligen Teile der ersten MTC-Geräte (601), einer RRC-Verbindungsaufbau-Abschlussnachricht an einen eNodeB in einem Netzwerkzugriffsvorgang;
Suchen, durch den eNodeB, nach einer Kernnetzwerk-Gerätekennung, die der ersten Terminalkennung gemäß der ersten in der RRC-Verbindungsaufbau-Abschlussnachricht enthaltenen Terminalkennung sowie einer Zuordnungsbeziehung zwischen der ersten Terminalkennung und der Kennung des Kernnetzwerkgeräts zugeordnet ist; und,
Auswählen, durch den eNodeB, eines Kernnetzwerkgeräts entsprechend der Kernnetzwerk-Gerätekennung, wobei die Zuordnungsbeziehung im eNodeB festgelegt oder durch Netzwerkübertragung erhalten wird; oder
Auswählen, durch den eNodeB, des Kernnetzwerkgeräts entsprechend der Kernnetzwerk-Gerätekennung gemäß der Kernnetzwerk-Gerätekennung, die in der RRC-Verbindungsaufbau-Abschlussnachricht enthalten ist; und
Auswählen, durch den eNodeB, des Kernnetzwerkgeräts, das der Kernnetzwerk-Gerätekennung entspricht.

5. Standortbasiertes Maschine-zu-Maschine-System, Folgendes umfassend:
ein Netzwerkgerät (603), erste Maschinentypkommunikations(MTC-)Geräte (601), die kommunikativ mit dem Netzwerkgerät (603) verbunden sind, einen MTC-Server (602), der kommunikativ mit dem Netzwerkgerät (603) verbunden ist, und mehrere Kernnetzwerkgeräte, die einen ersten Bereich abdecken;
wobei jedes Kernnetzwerkgerät der mehreren Kernnetzwerkgeräte für Folgendes konfiguriert ist:
nach dem Empfangen einer ersten von dem MTC-Server (602) gesendeten Dienstanforderung, vorgesehen zum Beschaffen von Dienstdaten eines ersten Dienstes von ersten MTC-Geräten (601), die den ersten Dienst in dem ersten Bereich ausführen und eine erste Terminalkennung und erste Abonnement-Informationen gemeinsam nutzen, Verwalten eines entsprechenden Teils der ersten MTC-Geräte (601) und Verwenden der ersten Terminalkennung, um den jeweiligen Teil der ersten MTC-Geräte (601) für den Zugriff auf ein Netzwerk auszulösen;
wobei das Netzwerkgerät (603) speziell dafür konfiguriert ist, die von den ersten MTC-Geräten (601) als ausgelöst gemeldeten Servicedaten zu empfangen, nachdem die ersten MTC-Geräte (601) als ausgelöst auf das Netzwerk zugegriffen haben, und die gemeldeten Servicedaten an den MTC-Server zu senden (602);
wobei jedes Kernnetzwerkgerät speziell dafür konfiguriert ist, gemäß Standortinformationen des ersten Bereichs und der ersten in der Dienstanforderung enthaltenen Terminalkennung eine Zugriffsauslösenachricht zu senden, die die erste Terminalkennung an einen eNodeB im ersten Bereich überträgt;
wobei der eNodeB dafür konfiguriert ist, die Zugriffsauslösenachricht an den jeweiligen Teil der ersten MTC-Geräte (601) in dem ersten Bereich zu senden, um sie für den Zugriff auf das Netzwerk auszulösen;
wobei jeder der jeweiligen Teile der ersten MTC-Geräte (601) konfiguriert ist für das Senden einer Zugriffsanforderung mit der ersten Terminalkennung an das entsprechende verwaltende Kernnetzwerkgerät, wenn das verwaltende Kernnetzwerkgerät für das erste MTC-Gerät (601) einen Kernnetzwerkkontext aufweist, das verwaltende Kernnetzwerkgerät konfiguriert ist für das Einrichten eines Trägers basierend auf dem Kernnetzwerkkontext zum Melden der Dienstdaten des ersten MTC-Geräts (601) an das Netzwerkgerät (603), wenn das verwaltende Kernnetzwerkgerät keinen Kernnetzwerkkontext des ersten MTC-Geräts (601) aufweist, das Kernnetzwerkgerät konfiguriert ist für das Senden einer Standortaktualisierungs-Nachricht mit der ersten Terminalkennung an einen Home Subscriber Server (HSS) des Kernnetzwerkgeräts zum Anfordern der ersten Abonnement-Informationen, der HSS konfiguriert ist für das Beschaffen der ersten Abonnement-Informationen basierend auf der ersten Terminalkennung, die in der Nachricht zum Aktualisieren des Standorts enthalten ist, und zum Hinzufügen einer Kennung des verwaltenden Kernnetzwerkgeräts zu einer Netzwerkgeräteliste, die den ersten Abonnenten-Informationen entspricht, und zum Zurückgeben der ersten Abonnement-Informationen an das verwaltende Kernnetzwerkgerät, um den Kernnetzwerkkontext für das erste MTC-Gerät (601) herzustellen, das verwaltende Kernnetzwerkgerät konfiguriert ist für das Einrichten eines Trägers, der auf dem Kernnetzwerkkontext basiert, abgeleitet aus den ersten Abonnement-Informationen für das erste MTC-Gerät (601), um Dienstdaten des ersten MTC-Geräts (601) an das Netzwerkgerät (603) zu melden, der HSS konfiguriert ist für das Prüfen, ob die Liste der Kernnetzwerkgeräte Kennungen anderer Kernnetzwerkgeräte des Bereichs mit mehreren Kernnetzwerkgeräten umfasst, die den ersten Abonnement-Informationen entsprechen, wobei die anderen Kernnetzwerkgeräte entsprechende Teile der ersten MTC-Geräte (601) verwalten und entsprechende Kernnetzwerkkontexte für die jeweiligen Teile der ersten MTC-Geräte (601) basierend auf den ersten Abonnement-Informationen aufweisen, wobei die jeweiligen Kernnetzwerkkontexte zum Erzeugen von Trägern verwendet werden, um Servicedaten der jeweiligen Teile der MTC-Geräte an das Netzwerkgerät (603) zu melden, und, falls dies der Fall ist, Untersagen einer Nachricht zum Abbrechen des Standorts an die anderen Kernnetzwerkgeräte der mehreren Kernnetzwerkgeräte zu senden, wobei die Nachricht zum Abbrechen des Standorts bewirkt, dass die anderen Kernnetzwerkgeräte die jeweiligen Kernnetzwerkkontexte für die jeweiligen Teile der ersten MTC-Geräte (601) löschen.

6. Computerprogrammprodukt, das Computerprogrammcode umfasst, der, wenn von einem Netzwerkgerät, von ersten Maschinentypkommunikations(MTC-)Geräten, von einem MTC-Server, von mehreren Kernnetzwerkgeräten, von einem eNodeB und von einem Home Subscriber Server (HSS) ausgeführt; das Netzwerkgerät, die ersten MTC-Geräte, den MTC-Server, die mehreren Kernnetzwerkgeräte, den eNodeB und den HSS veranlasst, ein Verfahren nach einem der Ansprüche 1 bis 4 auszuführen.

## Revendications

1. Procédé de communication de machine à machine géodépendant, le procédé comprend :
la réception (101), par chaque dispositif de réseau central d'une multiplage de dispositifs de réseau central couvrant une première zone, d'une première demande de service envoyée par un serveur de communications de type machine, MTC, (602) et destinée à l'obtention des données de service d'un premier service à partir des premiers dispositifs MTC (601) qui exécutent le premier service dans la première zone, dans lequel les premiers dispositifs MTC (601) partagent un premier identifiant de terminal et des premières informations d'abonnement et chaque dispositif de réseau central gère une partie respective des premiers dispositifs MTC (601) et utilise le premier identifiant de terminal pour déclencher la partie respective des premiers dispositifs MTC (601) afin d'accéder à un réseau ;
la réception (102), par un dispositif de réseau (603), des données de service du premier service signalées par les premiers dispositifs MTC (601) après que les premiers dispositifs MTC (601) ont accédé au réseau tel que déclenché ;
l'envoi (103), par le dispositif de réseau (603), des données de service au serveur MTC (602) ;
dans lequel l'étape de chaque dispositif de réseau central recevant (102) la première demande de service envoyée par le serveur MTC (602) et destinée à l'obtention des données de service du premier service dans la première zone, et utilisant le premier identifiant de terminal pour déclencher la partie respective des premiers dispositifs MTC (601) dans la première zone afin d'accéder au réseau, comprend :
l'envoi, par chaque dispositif de réseau central, selon des informations de localisation de la première zone et du premier identifiant de terminal transportées dans la demande de service, d'un message de déclenchement d'accès qui transporte le premier identifiant de terminal à un eNodeB dans la première zone ; et
l'envoi, par l'eNodeB, du message de déclenchement d'accès à la partie respective des premiers dispositifs MTC (601) dans la première zone pour les déclencher afin d'accéder au réseau ;
l'envoi (301), par chacune des parties respectives des premiers dispositifs MTC (601), d'une demande d'accès incluant le premier identifiant de terminal au dispositif de réseau central de gestion correspondant, si le dispositif de réseau central de gestion a un contexte de réseau central pour le premier dispositif MTC (601), l'établissement, par le dispositif de réseau central de gestion, d'un support sur la base du contexte de réseau central pour la déclaration des données de service du premier dispositif MTC (601) au dispositif de réseau (603), si le dispositif de réseau central de gestion n'a pas de contexte de réseau central du premier dispositif MTC (601), l'envoi (302), par le dispositif de réseau central, d'un message de mise à jour de la localisation incluant le premier identifiant de terminal à un serveur domestique d'abonné, HSS, du dispositif de réseau central pour demander les premières informations d'abonnement, l'obtention, par le HSS, des premières informations d'abonnement sur la base du premier identifiant de terminal inclus dans le message de mise à jour de la localisation et l'ajout, par le HSS, d'un identifiant du dispositif de gestion de réseau central à une liste de dispositifs de réseau correspondant aux premières informations d'abonné, le renvoi, par le HSS, des premières informations d'abonnement au dispositif de réseau central de gestion pour établir le contexte de réseau central pour le premier dispositif MTC (601), l'établissement, par le dispositif de réseau central de gestion, d'un support sur la base du contexte de réseau central dérivé des premières informations d'abonnement pour le premier dispositif MTC (601) pour rapporter les données de service du premier dispositif MTC (601) au dispositif de réseau (603), la vérification, par le HSS, si la liste des dispositifs de réseau central comprend des identifiants d'autres dispositifs de réseau central des multiples dispositifs de réseau central de la zone correspondant aux premières informations d'abonnement, dans lequel l'autre dispositif de réseau central gère les parties respectives des premiers dispositifs MTC (601) et a des contextes de réseau central respectifs pour les parties respectives des premiers dispositifs MTC (601) sur la base des premières informations d'abonnement, dans lequel les contextes de réseau central respectifs sont utilisés pour générer des supports afin de rapporter les données de service des parties respectives des dispositifs MTC au dispositif de réseau (603), si c'est le cas, interdisant, par le HSS, d'envoyer un message d'annulation de la localisation aux autres dispositifs de réseau central des multiples dispositifs de réseau central, dans lequel le message d'annulation de la localisation amène les autres dispositifs de réseau central à supprimer les contextes de réseau central respectifs pour les parties respectives des premiers dispositifs MTC (601).

2. Procédé selon la revendication 1, dans lequel :
l'étape d'envoi (301), par chacune des parties respectives des premiers dispositifs MTC (601), d'une demande d'accès incluant le premier identifiant de terminal au dispositif de réseau central de gestion correspondant comprend :
le transport, par un message de demande de connexion RRC envoyé par la partie respective des premiers dispositifs MTC (601) à un eNodeB, de différents identifiants d'utilisateur lorsque la partie respective des premiers dispositifs MTC qui partagent le premier identifiant de terminal et les premières informations d'abonnement dans la première zone réseau accèdent au réseau par le biais du même eNodeB simultanément dans un processus d'accès au réseau.

3. Procédé selon l'une des revendications 1 à 2, dans lequel :
l'étape d'envoi (301), par chacune des parties respectives des premiers dispositifs MTC (601), d'une demande d'accès incluant le premier identifiant de terminal au dispositif de réseau central de gestion correspondant comprend :
la création, par un eNodeB, de contextes de réseau d'accès radio, d'un support radio et des connexions d'interface S1 pour chacune des parties respectives des premiers dispositifs MTC (601) dans un processus d'accès au réseau lorsque les premiers dispositifs MTC (601) qui partagent le premier identifiant de terminal et les premières informations d'abonnement dans la première zone accèdent au réseau par le biais du même eNodeB.

4. Procédé selon l'une des revendications 1 à 3, dans lequel :
l'étape d'envoi (301), par chacune des parties respectives des premiers dispositifs MTC (601), d'une demande d'accès incluant le premier identifiant de terminal au dispositif de réseau central de gestion correspondant comprend :
l'envoi, par chacune des parties respectives des premiers dispositifs MTC (601), d'un message de configuration de connexion terminée RRC à un eNodeB dans un processus d'accès au réseau ;
la recherche, par l'eNodeB, d'un identifiant de dispositif de réseau central mappé au premier identifiant de terminal selon le premier identifiant de terminal transporté dans le message de configuration de connexion terminée RRC ainsi qu'une relation de mappage entre le premier identifiant de terminal et l'identifiant de dispositif de réseau central ; et,
la sélection, par l'eNodeB, d'un dispositif de réseau central correspondant à l'identifiant de dispositif de réseau central, dans lequel la relation de mappage est établie dans l'eNodeB ou obtenue par diffusion sur le réseau ; ou
la sélection, par l'eNodeB, du dispositif de réseau central correspondant à l'identifiant de dispositif de réseau central selon l'identifiant de dispositif de réseau central transporté dans le message de configuration de connexion terminée RRC ; et
la sélection, par l'eNodeB, du dispositif de réseau central correspondant à l'identifiant de dispositif de réseau central.

5. Système machine à machine géodépendant, comprenant :
un dispositif de réseau (603), des communications de premier type de machine, MTC, des dispositifs (601) connectés en communication avec le dispositif de réseau (603), un serveur MTC (602) connecté en communication avec le dispositif de réseau (603) et une multiplage des dispositifs de réseau central couvrant une première zone ;
chaque dispositif de réseau central de la multiplage des dispositifs de réseau principal est configuré pour :
après la réception d'une première demande de service envoyée par le serveur MTC (602) et destinée à l'obtention des données de service d'un premier service à partir de premiers dispositifs MTC (601) qui exécutent le premier service dans la première zone et partagent un premier identifiant de terminal et des premières informations d'abonnement, gérer une partie respective des premiers dispositifs MTC (601) et utiliser le premier identifiant de terminal pour déclencher la partie respective des premiers dispositifs MTC (601) afin d'accéder à un réseau ;
le dispositif réseau (603) est spécifiquement configuré pour recevoir les données de service signalées par les premiers dispositifs MTC (601) telles que déclenchées après que les premiers dispositifs MTC (601) ont accédé au réseau tel que déclenché, et envoyer les données de service signalées au serveur MTC (602) ;
dans lequel chaque dispositif de réseau central est spécifiquement configuré pour envoyer, selon des informations de localisation de la première zone et le premier identifiant de terminal transporté dans la demande de service, un message de déclenchement d'accès qui porte le premier identifiant de terminal à un eNodeB dans la première zone ;
l'eNodeB est configuré pour envoyer le message de déclenchement d'accès à la partie respective des premiers dispositifs MTC (601) dans la première zone pour les déclencher afin d'accéder au réseau ;
chacune des parties respectives des premiers dispositifs MTC (601) est configurée pour envoyer une demande d'accès incluant le premier identifiant de terminal au dispositif de réseau central de gestion correspondant, si le dispositif de réseau central de gestion a un contexte de réseau central pour le premier dispositif MTC (601), le dispositif de réseau central de gestion est configuré pour établir un support sur la base du contexte de réseau central pour rapporter les données de service du premier dispositif MTC (601) au dispositif de réseau (603), si le dispositif de réseau central de gestion n'a pas de contexte réseau central du premier dispositif MTC (601), le dispositif de réseau central est configuré pour envoyer un message de mise à jour de la localisation incluant le premier identifiant de terminal à un serveur domestique d'abonné, HSS, du dispositif de réseau central pour demander les premières informations d'abonnement, le HSS est configuré pour obtenir les premières informations d'abonnement sur la base du premier identifiant de terminal inclus dans le message de mise à jour de la localisation, ajouter un identifiant du dispositif de réseau central de gestion à une liste de dispositifs de réseau central correspondant aux premières informations d'abonné et renvoyer les premières informations d'abonnement au dispositif de réseau central de gestion pour établir le contexte de réseau central pour le premier dispositif MTC (601), le dispositif de réseau central de gestion est configuré pour établir un support sur la base du contexte de réseau central dérivé des premières informations d'abonnement pour le premier dispositif MTC (601) pour rapporter les données de service du premier dispositif MTC (601) au dispositif réseau (603), le HSS est configuré pour vérifier si la liste de dispositif de réseau central comprend des identifiants d'autres dispositifs de réseau central de la zone de dispositifs de réseau central multiples correspondant aux premières informations d'abonnement, dans lequel l'autre dispositif de réseau central gère les parties respectives des premiers dispositifs MTC (601) et a des contextes de réseau central respectifs pour les parties respectives des premiers dispositifs MTC (601) sur la base des premières informations d'abonnement, dans lequel les contextes de réseau central respectifs sont utilisés pour générer des supports afin de signaler les données de service des parties respectives des dispositifs MTC au dispositif de réseau (603), si tel est le cas, interdire d'envoyer un message d'annulation de localisation aux autres dispositifs du réseau central des dispositifs du réseau central multiples, dans lequel le message d'annulation de localisation amène les autres dispositifs de réseau central à supprimer les contextes de réseau central respectifs pour les parties respectives des premiers dispositifs MTC (601).

6. Produit de programme informatique comprenant un code de programme informatique qui, lorsqu'il est exécuté par un dispositif de réseau, une première communication de type machine, MTC, des dispositifs, un serveur MTC, une multiplage de dispositifs de réseau central, un eNodeB et un serveur d'abonné domestique HSS, amènera le dispositif de réseau, les premiers dispositifs MTC, le serveur MTC, la multiplage de dispositifs de réseau central, l'eNodeB et le HSS à exécuter un procédé selon l'une quelconque des revendications 1 à 4.
